(19) Europäisches Patentamt
European Patent Office
Office européen des brevets

(11) **EP 1 761 045 A2**

(12) # EUROPEAN PATENT APPLICATION

(43) Date of publication:
**07.03.2007 Bulletin 2007/10**

(51) Int Cl.:
***H04N 5/44*** *(2006.01)*

(21) Application number: **06018033.8**

(22) Date of filing: **29.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.08.2005 JP 2005251632**
**23.08.2006 JP 2006227083**

(71) Applicant: **Pioneer Corporation**
**Meguro-ku,**
**Tokyo (JP)**

(72) Inventor: **Takahashi, Yasunori,**
**c/o Pionerr Ohmori Plant**
**Ohta-ku,**
**Tokyo (JP)**

(74) Representative: **Klingseisen, Franz**
**Klingseisen & Partner**
**Postfach 10 15 61**
**80089 München (DE)**

(54) **Image signal processing apparatus and interlace-to-progressive conversion method**

(57)     An image signal processing apparatus and method capable of accurately determining a still image and a moving image irrespective of an image pattern represented by input image signals and performing an interlace-to-progressive conversion process suitable for the image type are provided. First progressive-scheme image signals for one frame are generated by performing interpolation or extrapolation calculation on input interlaced-scheme image signals for each field, and second progressive-scheme image signals for one frame is generated by combining the input image signals of the one and the other fields of two adjacent fields. Next, still image determination is performed to determine whether or not an image for one frame based on the input image signals or an image corresponding to each of display regions divided from the one frame is a still image. When it is determined that the image is a still image and it is determined that the image is not a still image, the first and second progressive-scheme image signals are mixed with each other with different mixing ratios to generate the progressive-scheme image signals.

## FIG. 1

**Description**

BACKGROUND OF THE INVENTION

1. Field of the Invention

The present invention relates to an image signal processing apparatus for converting an interlaced-scheme image signals to a progressive-scheme image signals and a conversion method thereof.

2. Description of the Related Art

Currently, as a television signal for terrestrial analog color television broadcast, an interlaced-scheme image signals such as an NTSC (National Television System) scheme signal or a PAL (Phase Alternating Line) scheme signal are mainly used.

In addition, recently display apparatuses having a matrix driving type display panel such as a plasma display panel, a liquid crystal display panel, and electroluminescence display panel are commercially provided. Such display apparatus carry out so-called progressive driving where image display (or writing of data on pixels) according to input image signals is performed sequentially in units of one display line. Therefore, when the aforementioned interlaced-scheme image signals is input to such display apparatus, interlace-to-progressive conversion (hereinafter, referred to as IP conversion) is performed to convert the interlaced-scheme image signals to the progressive-scheme image signal.

In order to convert the interlaced-scheme image signals to the progressive-scheme image signal, a delay circuit for delaying the input interlaced-scheme image signals by one field is used. Therefore, odd-numbered field image signals and odd-numbered field image signals are simultaneously obtained based on the input interlaced-scheme image signals and the output from the delay circuit. In addition, by combining the odd-numbered field image signals and the even-numbered field image signals, image signals for one frame needed for the progressive driving can be generated.

However, in such an IP conversion process, the image signal for one frame may be generated by combining the odd-numbered field image signals included in one frame among input image signals for two adjacent frames and the even-numbered field image signals included in the other frame. When the input interlaced-scheme image signals represent a still image, there is no problem. But, when the input interlaced-scheme image signals represent a moving image, there is a problem in that the image is displayed in the shape of a rattan blind.

The image signals for one frame with respect to a still image region where a displayed object does not move on one screen are generated by combining the odd-numbered field image signals and the even-numbered field image signals. The image signals for one frame with respect to a moving image region are generated by using the following process. Namely, the image signals for one frame with respect to the moving image region where the displayed object moves on the one screen are generated by performing up-down interpolation process on the image signals included in each field.

In order to defect the moving image region on the one screen, the following motion detection processing method has been proposed. For example, as disclosed in Japanese Patent Kokai No. 2003-179886, an inter-frame difference and an inter-field difference are obtained based on the input interlaced-scheme image signals, and the larger one among the differences is used as a moving image determining evaluation value. When the evaluation value is larger than a threshold value, the associated region is determined to be the moving image region.

SUMMARY OF THE INVENTION

For example, the inter-field difference of input image signals representing an image pattern such having a high vertical frequency component as a transversely-striped pattern increases irrespective of the moving image or the still image. In addition, for example, in a case where a moving image pattern changing periodically in units of a frame occurs on such a moving image as a flame and a waterfall, the inter-frame difference of the associated image signals may decrease even though the image is a moving image.

Therefore, erroneous image determination for the moving or still image may be made according to the image pattern represented by the input image signal. Accordingly, there is a problem in that the IP conversion process suitable for the image type (moving or still image) may not accurately performed.

A problem that the invention addresses is that it is not capable of performing a suitable IP conversion process.

According to a first aspect of the invention, there is provided an image signal processing apparatus for converting input interlaced-scheme image signals to progressive-scheme image signals, the image signal processing apparatus comprising: a first conversion circuit which generates first progressive-scheme image signals for one frame by performing interpolation or extrapolation calculation on the input image signals for each field; a second conversion circuit which generates second progressive-scheme image signals for one frame by combining the input image signals of the one and the other fields of two adjacent fields; a still image determination circuit which determines whether or not an image for one frame based on the input image signals or an image corresponding to each of display regions divided from the one frame is a still image; and a mixing component which mixes the first and second progressive-scheme image signals with different mixing ratios to generate the progressive-scheme image signals when the still image determination circuit determines that the image is a still image and when the still image determination circuit determines that the image is not a still image.

According to anther aspect of the invention, there is provided an interlace-to-progressive conversion method of converting input interlaced-scheme image signals to progressive-scheme image signals, the interlace-to-progressive conversion method comprising: a first conversion step of generating first progressive-scheme image signals for one frame by performing interpolation or extrapolation calculation on the input image signals for each field; a second conversion step of generating second progressive-scheme image signals for one frame by combining the input image signals of the one and the other fields of two adjacent fields; a still image determination step of determining whether or not an image for one frame based on the input image signals or an image corresponding to each of display regions divided from the one frame is a still image; and mixing step of mixing the first and second progressive-scheme image signals with different mixing ratios to generate the progressive-scheme image signals when, in the still image determination step, it is determined that the image is a still image and when, in the still image determination step, it is determined that the image is not a still image.

In the aforementioned aspects of the invention, the first progressive-scheme image signals for one frame are generated by performing the interpolation or extrapolation calculation on the input interlaced-scheme image signals for each field, and the second progressive-scheme image signals for one frame is generated by combining the input image signals of the one and the other fields of two adjacent fields. Next, still image determination is performed to determine whether or not an image for one frame based on the input image signals or an image corresponding to each of display regions divided from the one frame is a still image. When it is determined that the image is a still image and it is determined that the image is not a still image, the first and second progressive-scheme image signals are mixed with each other with different mixing ratios to generate the progressive-scheme image signals. According to such still image determination, even in a case where an image having a high vertical frequency component such as a transversely-striped shape or an image changing periodically in units of a frame such as a flame image or a waterfall image is included in a portion of one screen, it is possible to accurately determine a still image or a moving image.

In the aforementioned aspects of the invention, it may be determined that the input image signals represent a still image when a sum of difference values of the input image signals between the two adjacent fields for the same pixels is smaller than a predetermined threshold value. According to such still image determination, with respect to, for example, input image signals representing a flash image which flashes in only one-field time interval or input image signals representing an image of a rotating propeller which returns to the same image in a period of one frame, it is possible to prevent an erroneous determination that the image is a still image.

In the aforementioned aspects of the invention, it may be determined that the input image signals represent a still image when a sum of difference values of the input image signals between the two adjacent fields for the same pixels is smaller than a predetermined first threshold value and when a sum of difference values of the input image signals between two fields of the last and next fields with respect to each field is smaller than a predetermined second threshold value. According to such still image determination, with respect to, for example, input image signals representing an image pattern having a high vertical frequency component such as a transversely-striped shape as well as input image signals representing a flash image which flashes in only one-field time interval or input image signals representing an image of a rotating propeller which returns to the same image in a period of one frame, it is possible to perform the still image determination without erroneous determination.

According to the invention, since the determination of the still image and the moving image is accurately performed on the input interlaced-scheme image signals, an interlace-to-progressive conversion process suitable for image types (moving image or still image) can be implemented.

BRIEF DESCRIPTION OF THE DRAWINGS

The invention will be described with reference to the accompanying drawings, wherein like numbers reference like elements.

Fig. 1 is a view showing a construction of an IP conversion processing circuit as an image signal processing apparatus according to the invention;
Fig. 2 is a view showing a still image determination flow in a still image determination circuit 9 shown in Fig. 1;
Figs. 3A to 3C are views for explaining operations of an inter-field interpolating circuit 5 and a field mixing circuit 6;
Fig. 4 is a view showing an example of a plurality of displayed regions divided from one screen so that the still image determination is performed on each display region;

Fig. 5 is a view showing an example of pixel arrangement for explaining operations of determining a still image for each pixel;

Fig. 6 is a view showing a construction of an IP conversion processing circuit according to another embodiment of the invention;

Fig. 7 is a view showing an inner construction of a mixing ratio calculation circuit shown in Fig. 6;

Fig. 8 is a view showing an example of transition mode of coefficient G according to a first coefficient selection processing;

Fig. 9 is a view showing an example of transition mode of coefficient G according to a second coefficient selection processing;

Fig. 10 is a view showing accumulation results of still image depth signal SD and correlation with coefficient G for each field;

Fig. 11 is a view showing another example of transition mode of coefficient G according to a second coefficient selection processing;

Figs. 12A to 12C are views for explaining effect according to an IP conversion processing circuit shown in Fig. 6; and

Figs. 13A to 13C are views for explaining effect according to an IP conversion processing circuit shown in Fig. 6.

DETAILED DESCRIPTION OF THE INVENTION

Hereinafter, embodiments of the invention are described in detail with reference to the accompanying drawings.

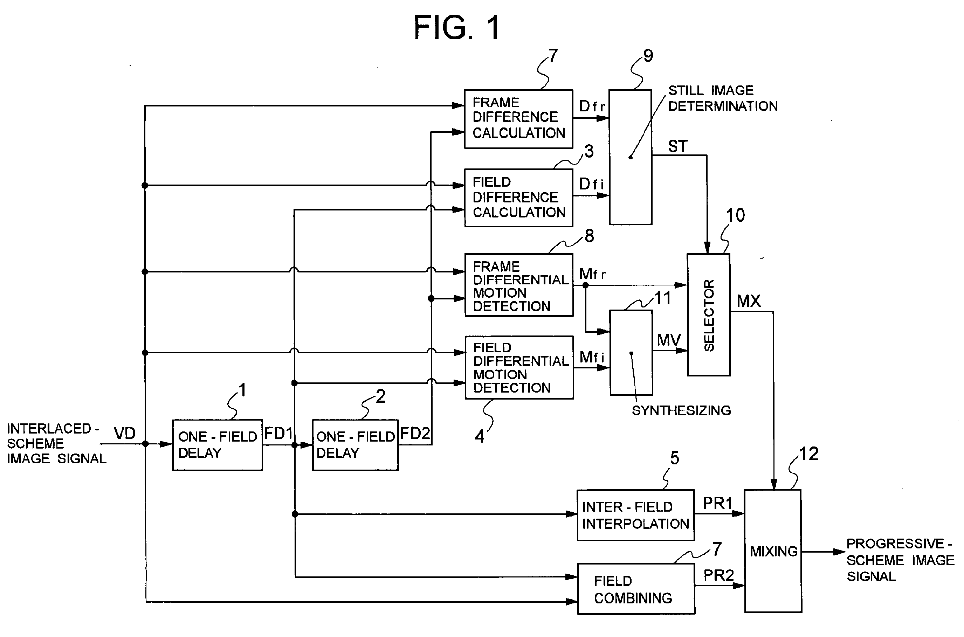

Fig. 1 is a view showing a construction of an IP conversion processing circuit as an image signal processing apparatus according to the invention.

Referring to Fig. 1, an one-field delay circuit 1 generates a first delayed image signal FD1 by delaying an input interlaced-scheme image signal VD by one-field display time interval and supplies the first delayed image signal to a one-field delay circuit 2, a field difference calculation circuit 3, a field motion detection circuit 4, an inter-field interpolating circuit 5, and a field mixing circuit 6. The one-field delay circuit 2 generates a second delayed image signal FD2 by delaying the first delayed image signal FD1 by one-field display time interval and supplies the second delayed image signal FD2 to a frame difference calculation circuit 7 and a frame motion detection circuit 8.

The field difference calculation circuit 3 generates an interpolated image signal corresponding to a field different from that of the first delayed image signal FD1 by performing an interpolation calculation between adjacent display lines based on the first delayed image signal FD1. Namely, in a case where the first delayed image signal FD1 is an image signal corresponding to an odd field, the field difference calculation circuit 3 generates the interpolated image signal corresponding to an even field by performing the interpolation calculation, and in a case where the first delayed image signal FD1 is an image signal corresponding to an even field, the field difference calculation circuit 3 generates the interpolated image signal corresponding to an odd field. Therefore, an image signal corresponding to the same field as that of the input interlaced-scheme image signals VD is generated by performing such interpolation calculation. Next, the field difference calculation circuit 3 calculates an absolute value of the difference value between the interpolated image signal and the interlaced-scheme image signal VD in units of a pixel and supplies a sum of the absolute values as a field difference value Dfi to the still image determination circuit 9.

Namely, the field difference calculation circuit 3 obtains the sum of the differences of the interlaced-scheme image signals VD between the adjacent two fields in the same pixels as the field difference value Dfi and supplies the field difference value Dfi to the still image determination circuit 9.

$$Dfi = \sum_{x=1}^{n_x-1} \sum_{x=1}^{n_y-1} \left( \left| VD(x,y) - [FD1(x,y-1) + FD1(x,y+1)]/2 \right| \right) \qquad \text{(Equation 1)}$$

x: horizontal coordinate in one field
y: vertical coordinate in one field
$n_x$: number of horizontal pixels in one field
$n_y$: number of vertical pixels in one field

The frame difference calculation circuit 7 obtains an absolute values of the difference value between the interlaced-scheme image signal VD and the second delayed image signal FD2 for each pixel and supplies a sum of the absolute values as the frame difference value Dfr to the still image determination circuit 9.

In the above equation, when y=1 at the uppermost portion of the screen, the interpolation calculation is as follows.

$$[FD1 (x, y+1)+FD1 (x, y+1)]/2$$

When y=$n_y$-1 at the lowest portion of the screen, the interpolation calculation is as follows.

$$[FD1 (x, n_y-1)+FD1 (x, n_y-1)]/2$$

Namely, the frame difference calculation circuit 7 obtains the sum of the difference values of the interlaced-scheme image signals VD between the two fields, that is, the last field and the next field in the same pixels as the frame difference value Dfr and supplies the field difference value Dfi to the still image determination circuit 9.

$$Dfr = \sum_{x=1}^{n_x-1} \sum_{x=1}^{n_y-1} \left( |VD(x,y) - FD2(x,y)| \right) \qquad \text{(Equation 2)}$$

x: horizontal coordinate in one field
y: vertical coordinate in one field
$n_x$: number of horizontal pixels in one field
$n_y$: number of vertical pixels in one field

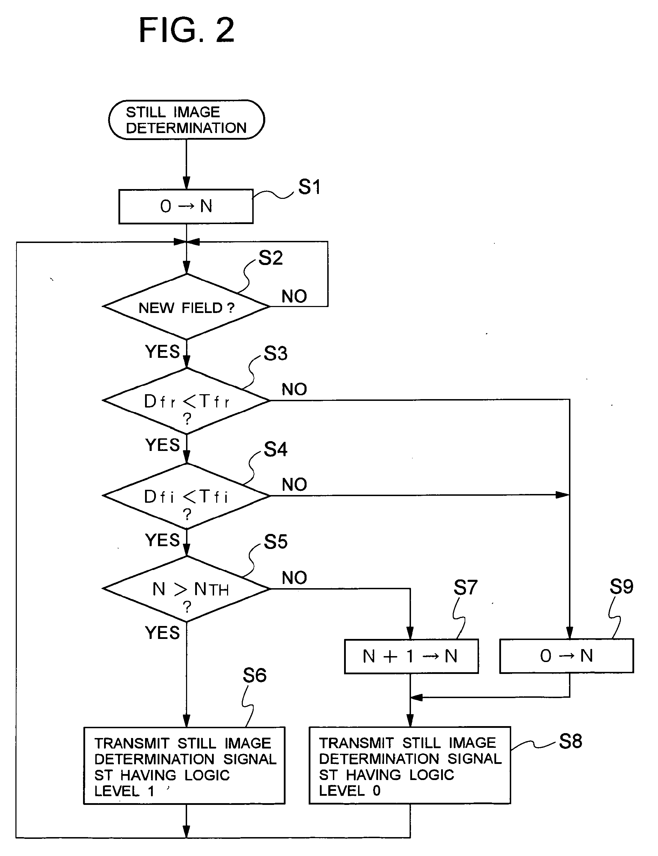

The still image determination circuit 9 determines based on the field difference value Dfi and the frame difference value Dfr whether or not the image represented by the interlaced-scheme image signals VD for one frame is a still image according to the still image determination flow shown in Fig. 2.

Referring to Fig. 2, the still image determination circuit 9 stores "0" as an initial value of still image determination times N in an internal register N (not shown) (Step S1). Next, the still image determination circuit 9 repeatedly determines whether or not new interlaced-scheme image signals VD for one field is supplied to the IP conversion circuit, until the signals are supplied (Step S2). In Step S2, when the new interlaced-scheme image signals VD for one field are determined to be supplied, the still image determination circuit 9 determines whether or not the frame difference value Dfr is smaller than a predetermined threshold value $T_{fr}$ (Step S3). When the frame difference value Dfr is smaller than the predetermined threshold value $T_{fr}$, the still image determination circuit 9 determines that the interlaced-scheme image signals VD represents a still image.

In Step S3, when the frame difference value Dfr is determined to be smaller than the predetermined threshold value $T_{fr}$, the still image determination circuit 9 determines whether or not the field difference value Dfi is smaller than a predetermined threshold value $T_{fi}$ (Step S4). When the field difference value Dfi is smaller than the predetermined threshold value $T_{fi}$, the still image determination circuit 9 determines that the interlaced-scheme image signals VD represents the still image. Due to the still image determination in Step S4, with respect to, for example, input image signals representing a flash image which flashes in only one-field time interval or input image signals representing an image of a rotating propeller which returns to the same image in a period of a frame, it is possible to prevent an erroneous determination that the image is a still image because a change of the image is not reflected in the frame difference value.

In Step S4, when the field difference value Dfi is determined to be smaller than the predetermined threshold value $T_{fi}$, the still image determination circuit 9 determines whether or not the still image determination times N stored in the internal register are larger than a predetermined still image determination threshold value $N_{TH}$ (Step S5). In Step S5, when the still image determination times N are determined to be larger than the still image determination threshold value $N_{TH}$, the still image determination circuit 9 supplies a still image determination signal ST having the logic level 1 indicating that the interlaced-scheme image signals VD for one field represents the still image to a selector 10 (Step S6).

In Step S5, when the still image determination times is not determined to be larger than the still image determination threshold value $N_{TH}$, the still image determination circuit 9 writes and stores a value obtained by adding "1" to the still image determination times N stored in the internal register as new still image determination times N in the internal register (Step S7). After Step S7, the still image determination circuit 9 supplies a still image determination signal ST having the logic level 0 indicating that the supplied interlaced-scheme image signals VD for one field represents the moving image to the selector 10 (Step S8).

In addition, in Step S3, when the frame difference value Dfr is not determined to be smaller than the threshold value Tfr, or in Step S4, when the field difference value Dfi is not determined to be smaller than the threshold value Tfi, the still image determination circuit 9 initializes the still image determination times N stored in the internal register as "0" (Step S9) and performs Step S8. Namely, the still image determination signal ST having the logic level 0 indicating that the supplied interlaced-scheme image signals VD for one field represents the moving image is supplied to the selector 10.

Next, after the Step S6 or S8, the still image determination circuit 9 returns to Step S2 to perform a series of Steps S3 to S9 every time that the interlaced-scheme image signals VD for one field are supplied.

Namely, when the frame difference value Dfr is determined to be equal to or larger than the predetermined threshold value $T_{fr}$ (Step S3) or when the field difference value Dfi is determined to be equal to or larger than the predetermined threshold value $T_{fi}$ (Step S4), the still image determination circuit 9 determines that the input interlaced-scheme image signals represents the moving image (Step S8).

On the other hand, when the frame difference value Dfr is determined to be smaller than the threshold value $T_{fr}$ and when the field difference value Dfi is also determined to be smaller than the threshold value $T_{fi}$, the still image determination circuit 9 determines that the input interlaced-scheme image signals for one field represents the still image.

Due to the still image determination, in Step S3, when the sum of the difference values of the input image signals between the two fields of the last and next fields of each field for the same pixels is determined to be smaller than a predetermined second threshold value, that is, when correlation between frames is high, the input image signals for the associated one frame are determined to represent a still image. In such a flash image which flashes in only one-field time interval, the inter-frame correlation may be detected to be high. In addition, in such a high speed periodic motion as that of a propeller, the inter-frame correlation may be detected when synchronization is made.

Therefore, in Step S4, when the sum of the difference values of the input image signals between the two adjacent fields for the same pixels is smaller than the predetermined first threshold value, that is, when inter-field correlation is high, the input image signals for the associated one frame are determined to represent a still image. Due to such still image determination, even in a case where the flash image which flashes in only one-field time interval or the image of the rotating propeller which returns to the same image in a period of a frame is supplied in a portion of one screen, the still image determination is accurately made without an erroneous determination. Actually, in the still image determination of Step S4, when the sum of the difference values between the input image signal of each field and the interpolated image signals based on the input image signal of the fields adjacent to the associated field for the same pixels is smaller than the predetermined first threshold value, the input image signals for the associated one frame are determined to represent a still image. At this time, the interpolated image signal is an image signal for the same field as that of the input image signal obtained by performing the interpolation calculation based on the input signal corresponding to each of the display lines adjacent to each other in the up and down directions. The interpolation process may be an interpolation process from an input image signal corresponding to the input image signal in the scan direction and located on the display line in the vicinity of the display line corresponding to the input image signal. In addition, an extrapolation process may be used instead of the interpolation process.

In general, as the correlation between the current field and the last field is high, the correlation between the current field and the next field is also high. Therefore, the correlation between the last field and the next field becomes high. Namely, in a case where the inter-field correlation is high, the inter-frame correlation tends to be high, so that the associated image may be highly likely to be the still image. In addition, the inter-field correction for such an image having high correlation as the aforementioned flash image or the image of the rotating propeller also becomes lower, so that motion detection can be performed. However, the inter-frame correlation for the still image having an image pattern having a high vertical frequency component such as a transversely-striped shape in a period of two scan lines is detected to be high, but the inter-field correlation thereof is detected to be low. Fortunately, such a peculiar pattern is not frequently covered over the entire screen. Therefore, although such a peculiar pattern is included in a portion of the still image on the screen, the entire image on the screen is determined to be the still image.

Similarly, when a sum of the difference values of the input image signals between the two adjacent fields for the same pixels in one display screen is smaller than the predetermined first threshold value, the input image signals are determined to represent a still image. On the other hand, when a sum of the difference values of the input image signals between the two fields of the last and next fields for the same pixels in one display screen is smaller than the predetermined second threshold value, the input image signals may be high likely to represent a still image. However, an image of high speed motion such as a flash image may be erroneously determined to be a still image.

Therefore, when the sum of the difference values of the input image signals between the two adjacent fields for the same pixels in one display screen is smaller than the predetermined first threshold value and when the sum of the difference values of the input image signals between the two fields of the last and next fields for the same pixels in one display screen is smaller than the predetermined second threshold value, the input image signals are determined to represent a still image, so that a probability of erroneous detection can be reduced.

In summary, the still image determination circuit 9 determines based on the sum of the difference values of the input image signals between the two adjacent fields for the same pixels and the sum of the difference values of the input image signals between the two fields of the last and next fields for the same pixels whether or not each image for one screen is a still image. Accordingly, even in a case where image signals representing a flash image which flashes on a portion of one screen in only one-field time interval, an image of a rotating propeller which returns to the same image in a period of a frame, or an image having a high vertical frequency component such as a transversely-striped shape are supplied, the still image determination is made without erroneous determination.

Next, as shown in Fig. 1, the field motion detection circuit 4 generates an interpolated image signal HS corresponding to a field different from that of the first delayed image signal FD1 by performing interpolation calculation between the adjacent display lines based on the first delayed image signal FD1 according to the following equation.

$$HS = [FD1 \ (x, \ y-1) + FD1 \ (x, \ y+1)]/2$$

x: horizontal coordinate (1 - $n_x$) in one field
y: vertical coordinate (1 - $n_y$) in one field
$n_x$: number of horizontal pixels in one field
$n_y$: number of vertical pixels in one field

Next, the field motion detection circuit 4 calculate absolute values of difference values between the interpolated image signals HS and the interlaced-scheme image signals VD for the pixels and supplies the calculation results for the pixels as sequentially-represented field motion signals Mfi to a synthesizing circuit 11. Namely, the field motion detection circuit 4 supplies the difference values of the interlaced-scheme image signals VD between the adjacent fields for the same pixels as the field motion signals Mfi representing an amount of image motion between the fields to the synthesizing circuit 11.

The frame motion detection circuit 8 calculates absolute values of difference values between the interlaced-scheme image signals VD and the second delayed image signal FD2 for the pixels and supplies the calculation results of the pixels as frame motion signals Mfr to the synthesizing circuit 11. Namely, the frame motion detection circuit 8 calculates the difference values of the interlaced-scheme image signals VD between the two fields of the last and next fields for the same pixels and supplies the difference values as the frame motion signals Mfr representing an amount of image motion between the frames to the synthesizing circuit 11.

The synthesizing circuit 11 compares the field motion signals Mfi multiplied with predetermined weighting coefficients with the frame motion signals Mir for the pixels and supplies larger ones as synthesized motion signals MV to the selector 10.

The selector 10 selects one of the synthesized motion signals MV and the frame motion signals Mfr according to the still image determination signals ST and supplies the selected signals as mixing ratio signals MX designating a mixing ratio to a mixing circuit 12. When the still image determination signal ST having the logic level 1 indicating a still image is supplied, the selector 10 selects the frame motion signal Mfr and supplies the frame motion signal Mfr as the mixing ratio signal MX to the mixing circuit 12. On the other than, when the still image determination signal ST having the logic level 0 indicating a non-still image is supplied, the selector 10 selects the synthesized motion signals MV and supplies the synthesized motion signals MV as the mixing ratio signal MX to the mixing circuit 12.

The inter-field interpolating circuit 5 generates the interpolated image signal HS corresponding to a field different from that of the first delayed image signal FD1 by performing interpolation calculation (expressed by the following equation) between the adjacent display lines based on the first delayed image signal FD1.

$$HS = [FD1 \ (x, \ y-1) + FD1 \ (x, \ y+1)]/2$$

x: horizontal coordinate (1 - $n_x$) in one field
y: vertical coordinate (1 - $n_y$) in one field
$n_x$: number of horizontal pixels in one field
$n_y$: number of vertical pixels in one field

Next, the inter-field interpolating circuit 5 generates image signals for one frame by alternately combining the interpolated image signals HS and the first delayed image signals FD1 in unit of one display line and supplies the image signals for one frame as first progressive-scheme image signals PR1 to the mixing circuit 12. Namely, the inter-field interpolating circuit 5 generates the first progressive-scheme image signals PR1 for one frame by performing the interpolation calculation on the input interlaced-scheme image signals VD for each field.

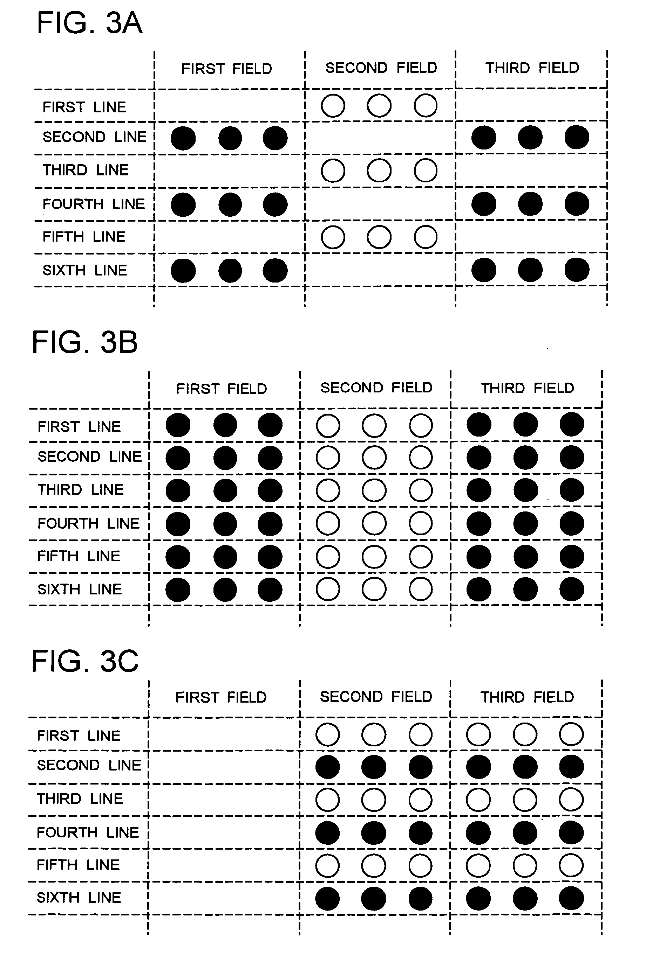

Next, in an exemplary case where interlaced-scheme image signals VD (first to third fields) are supplied as shown in Fig. 3A, the operations of the inter-field interpolating circuit 5 are described.

Referring to Fig. 3A, the odd-numbered field is constructed with image signals corresponding to even-numbered lines such as the second line, the fourth line, and the sixth line and includes entire-pixel "black" signals (denoted by a black circle). The even-number field is constructed with image signals corresponding to odd-numbered lines such as the first line, the third line, and the fifth line and includes entire-pixel "white" signals (denoted by a white circle). In Fig. 3A, since the pixels in the scan line direction are simple, only three pixels are shown.

The inter-field interpolating circuit 5 generates the first progressive-scheme image signals PR1 shown in Fig. 3B according to the interlaced-scheme image signals VD shown in Fig. 3A. Namely, with respect to the first field, the inter-field interpolating circuit 5 generates the third-line image signal by performing the interpolation calculation between the pixels located at the same position in the scan line direction based on the image signals of the second and fourth lines. Similarly, the inter-field interpolating circuit 5 generates the fifth-line image signal by performing the interpolation calculation between the pixels located at the same position in the scan line direction based on the image signals of the fourth and sixth lines. Since the first line has only the second line as the adjacent line, the image signal of the second line is used as the image signal of the first line. As a result, the first progressive-scheme image signals PR1 for one frame obtained by the interpolation calculation based on the image of the first field becomes the entire-pixel "black". With respect to the second field, the inter-field interpolating circuit 5 generates the second-line image signal by performing the interpolation calculation between the pixels located at the same positions in the scan line direction based on the first and third lines. Similarly, the inter-field interpolating circuit 5 generates the fourth-line image signal by performing the interpolation calculation between the pixels located at the same position in the scan line direction based on the image signals of the third and fifth lines. As a result, the first progressive-scheme image signals PR1 for one frame obtained by the interpolation calculation based on the image of the second field becomes the entire-pixel "white".

Next, the field mixing circuit 6 generates image signals for one frame by alternately combining the interlaced-scheme image signals VD and the first delayed image signals FD1 in unit of one display line and supplies the image signals for one frame as second progressive-scheme image signals PR2 to the mixing circuit 12. Namely, the field mixing circuit 6 generates the second progressive-scheme image signals PR2 for one frame by combining with the interlaced-scheme image signal VD of the one or the other fields of the two adjacent fields.

Next, in an exemplary case where interlaced-scheme image signals VD (first to third fields) are supplied as shown in Fig. 3A, the operations of the field mixing circuit 6 are described.

The field mixing circuit 6 generates the second progressive-scheme image signals PR2 shown in Fig. 3C according to the interlaced-scheme image signals VD shown in Fig. 3A. Namely, the field mixing circuit 6 uses the image signals corresponding to the second line of the first field shown in Fig. 3A as the image signals corresponding to the second line of the second field shown in Fig. 3C. In addition, the field mixing circuit 6 uses the image signals corresponding to the fourth line of the first field shown in Fig. 3A as the image signals corresponding to the fourth line of the second field shown in Fig. 3C. In addition, the field mixing circuit 6 uses the image signals corresponding to the sixth line of the first field shown in Fig. 3A as the image signals corresponding to the sixth line of the second field shown in Fig. 3C. As a result, in the second progressive-scheme image signals PR2 for one frame in the second field compensated by the image of the first field, the odd-numbered lines become the entire-pixel "black", and the even-numbered lines become the entire-pixel "white".

The mixing circuit 12 output a mixed signal obtained by mixing the first progressive-scheme image signals PR1 and the second progressive-scheme image signals PR2 between the corresponding pixels with a mixing ratio represented by the mixing ratio signal MX for the pixels as a final progressive-scheme image signal. Namely, the mixing circuit 12 performs the mixing with a mixing ratio of k1:k2 represented by the mixing ratio signals MX according to the following equation.

$$PR1 \cdot k1 + PR2 \cdot k2 \quad (here, \ k1 + k2 = 1)$$

And the, the mixing circuit 12 outputs the mixing result as the progressive-scheme image signal. In this case, the mixing circuit 12 performs the mixing based on the so-called $\alpha$-blending scheme where the sum of k1 and k2 is always 1. As the motion of the image is large, the mixing ratio of the first progressive-scheme image signal PR1 represented by the mixing ratio signal MX increases. Therefore, a correspondence between the values of the mixing ratio signals MX and the mixing ratios k1:k2 is set in advance, and the mixing ratio is controlled based on the correspondence.

In summary, when the input image signals for one frame are determined to represent a still image, the mixing circuit 12 mixes the first and second progressive-scheme image signals with a first mixing ratio. The first mixing ratio for each pixel is set according to the result of the frame differential motion direction for each pixel. Namely, when the input image signals for one display screen are determined to represent a still image, partial motion is detected under the assumption that there is no high speed motion that cannot be detected from the inter-frame differences. Therefore, although an image pattern having a high vertical frequency component such as a transversely-striped shape is detected, the pattern is neglected, so that it is possible to prevent the detection that the still image signal is erroneously detected as a moving signal.

On the other hand, when the input image signals for one frame are not determined to represent a still image, the progressive-scheme image signals are generated by mixing the first and second progressive-scheme image signals with a second mixing ratio. In this case, the second mixing ratio is a result of synthesizing the inter-frame differential motion detection result and the inter-field differential motion detection result for each pixel. When the input image signals for one frame are determined to represent a moving image, there is need to take into consideration a high speed motion which can be detected by using only the inter-field differences. More specifically, in such a flash image, the entire screen flashes at instant, and in such a flight image where a flight distinguishably moves on a background screen, a propeller moves in the same period as the frame frequency. Therefore, in these images, motion diction cannot be performed by using the inter-frame differences. In such a case where the moving image is distinguishable over the entire screen, the first and second progressive-scheme image signals are mixed to each other (with the second mixing ratio) by taking into consideration the inter-field differences additionally, so that the flash image or the high speed image of the propeller cannot be reproduced.

The synthesizing circuit 11 may employ various methods of synthesizing the inter-frame differential motion detection result and the inter-field differential motion detection result. The inter-frame differences correspond to motion in a two-field time interval, and the inter-field differences correspond to one-field time interval. Therefore, in the progressive screen, when the change between the adjacent scan lines is very small, the inter-frame difference is larger two times than the inter-field difference. Actually, in the progressive screen, the inter-field difference may increase by an amount corresponding to addition of the change between the adjacent scan lines. Therefore, a weighting factor of the inter-frame difference is set to 1, and a weight factor of the inter-field difference is set based on a preferred image quality or the associated input image signal. Next, the weighted inter-frame differential motion detection result and the weighted inter-field differential motion detection result are compared to each other. As described above, the second mixing ratio may be set based on the larger one in the two results. Alternatively, a sum of the two results or an average thereof may be set as the second mixing ratio.

In the aforementioned embodiment, the still image determination circuit 9 determines whether or not the image based on the input image signal for each one-screen image is a still image. Alternatively, the one screen is divided into a plurality of display regions, and it may be determined whether or not the image to be displayed on each of the display regions is a still image.

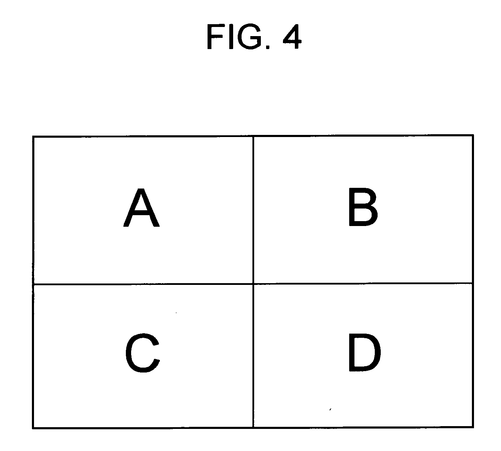

For example, as shown in Fig. 4, one screen is divided into four display regions A to D, and it is determined whether or not the image to be displayed on each of the display regions A to D is a still image. The still image determination signal ST representing the determination result is supplied to the selector 10. Namely, as shown in Fig. 4, the still image determination circuit 9 sequentially supplies the still image determination signal $ST_A$ representing whether or not the image to be displayed in the display region A is a still image, the still image determination signal $ST_B$ representing whether or not the image to be displayed in the display region B is a still image, the still image determination signal $ST_C$ representing whether or not the image to be displayed in the display region C is a still image, and the still image determination signal $ST_D$ representing whether or not the image to be displayed in the display region D is a still image to the selector 10. In this case, the frame difference calculation circuit 7 obtains the frame difference value Dfr for each of the display regions A to D, that is, the sum of the interlaced-scheme image signals VD between the two adjacent fields of the last and next field with respect to each field for the same pixels and supplies the frame difference value Dfr to the still image determination circuit 9. The field difference calculation circuit 3 obtains the field difference value Dfi for each of the display regions A to D, that is, the sum of the interlaced-scheme image signals VD between the two adjacent fields for the same pixels and supplies the field difference value Dfi to the still image determination circuit 9. In other words, in the still image determination, it may be determined whether or not the image for one frame based on the input image signals or the image corresponding to each of the display regions divided from the one frame is a still image.

In the embodiment shown in Fig. 4, display regions A to D, which is an object of the still image determination, include different pixel group, respectively. However, a part of each of the display regions, which is the object of the still image determination, may be overlapped each other. That is, each of the two display regions adjacent to each other includes the same pixels in each of the plurality of display regions. In the mixing circuit 12, the still image determination where the pixel group adjacent to periphery of the pixel is a determination object may be performed for each pixel in junction with mixing operation for each pixel.

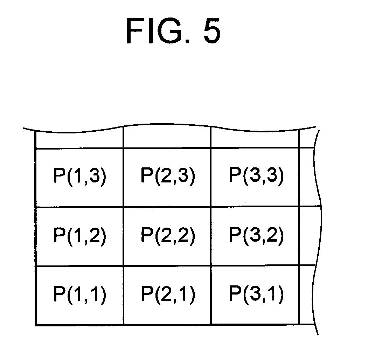

For example, in the mixing circuit 12, as shown in Fig. 5, when a mixing process is performed corresponding to pixel P(1,1), the still image determination circuit 9 performs a still image determination with respect to the display region (hereinafter, referred to as a first still image determination object region) including pixels having pixel P(1,1), pixel P(1,2), pixel P(2,1) and pixel P(2,2) with the pixel P(1,1) as an axis.

Further, in the mixing circuit 12, as shown in Fig. 5, when a mixing process is performed corresponding to pixel P(2,1), the still image determination circuit 9 performs a still image determination with respect to the display region (hereinafter, referred to as a second still image determination object region) including pixels having pixel P(2,1), pixel P(1,1), pixel P(1,2), P(2,2), pixel P(3,2) and pixel P(3,1) with the pixel P(2,1) as an axis.

Further, in the mixing circuit 12, as shown in Fig. 5, when a mixing process is performed corresponding to pixel P(1,2), the still image determination circuit 9 performs a still image determination with respect to the display region (hereinafter, referred to as a third still image determination object region) including pixels having pixel P(1,2), pixel P (1,3), pixel P(2,3), P(2,2), pixel P(2,1) and pixel P(1,1) with the pixel P(1,2) as an axis.

Further, in the mixing circuit 12, as shown in Fig. 5, when a mixing process is performed corresponding to pixel P(2,2), the still image determination circuit 9 performs a still image determination with respect to the display region (hereinafter, referred to as a fourth still image determination object region) including pixels having pixel P(2,2), pixel P (1,2), pixel P(1,3), P(2,3), pixel P(3,3), pixel P(3,2), P(3,1), pixel P(2,1) and pixel P(1,1)with the pixel P(2,2) as an axis.

According to this still image determination process, each of the display regions adjacent to each other includes the same pixels. Therefore, as shown in Fig. 4, when the still image determination is performed in an adjacent boundary of each of the display regions, an accuracy of the still image determination is increased, compared to being performed for each of the display regions having different pixel group.

In the aforementioned embodiment, although the first progressive-scheme image signals PR1 for one frame are generated by performing the interpolation calculation on the input image signals VD for each field. Alternatively, the first progressive-scheme image signals PR1 may be generated by performing extrapolation calculation on the input image signals VD. In other words, the first progressive-scheme image signals PR1 for one frame may be generated by performing the interpolation calculation or the extrapolation calculation on the input image signals VD for each field.

As described above, in the IP conversion process shown in Figs. 1 and 2, the first progressive-scheme image signals PR1 for one frame are generated by performing the interpolation calculation or the extrapolation calculation on the input image signals VD. Next, the second progressive-scheme image signals PR2 for one frame are generated by combining the input image signals corresponding to the one and the other of the two adjacent fields for each of the current fields. Next, when the input image signal represent a still image, the progressive-scheme image signals are generated by mixing the first and second progressive-scheme image signals with the first mixing ratio. When the input image signal does not a still image, the progressive-scheme image signals are generated by mixing the first and second progressive-scheme image signals with the second mixing ratio.

In the IP conversion circuit shown in Fig. 1, the first and second progressive-scheme image signals are mixed with different mixing ratios (first and second ratios) for the case where the input image signals represent a still image and the case where the input image signals do not represents a still image so as to generate a final progressive-scheme image signal.

In the determination whether or not the input image signals represent a still image, the IP conversion circuit shown in Fig. 1 determines whether or not the image for one frame based on the input image signal s or the image corresponding to each of the display regions divided from the one frame is a still image.

Therefore, due to the still image determination, even in a case where an image having a high vertical frequency component such as a transversely-striped shape or an image changing periodically in units of a frame such as a flame image and a waterfall image is included in a portion of one screen, it is possible to accurately determine the still image and the moving image. Accordingly, an interlace-to-progressive conversion process suitable for image types (moving image or still image) can be implemented.

In the aforementioned embodiment shown in Fig. 1, when it is determined that an image based on the input image signals is a still image, mixing process of mixing the first progressive-scheme image signal PR1 and the second progressive-scheme image signal PR2 with a mixing ratio represented by a frame motion signal Mfr can be implemented.

In this case, the frame motion signal Mfr is comparatively small value because the image based on the input image signals is a still image. Therefore, according to the mixing process based on the frame motion signal Mfr, there is a problem that a change of quality of entire image is visualized and thereby an image having a sense of incongruity is displayed, since a mixing ratio of the second progressive-scheme image signal PR2 becomes rapidly large, compared to the first progressive-scheme image signal PR1.

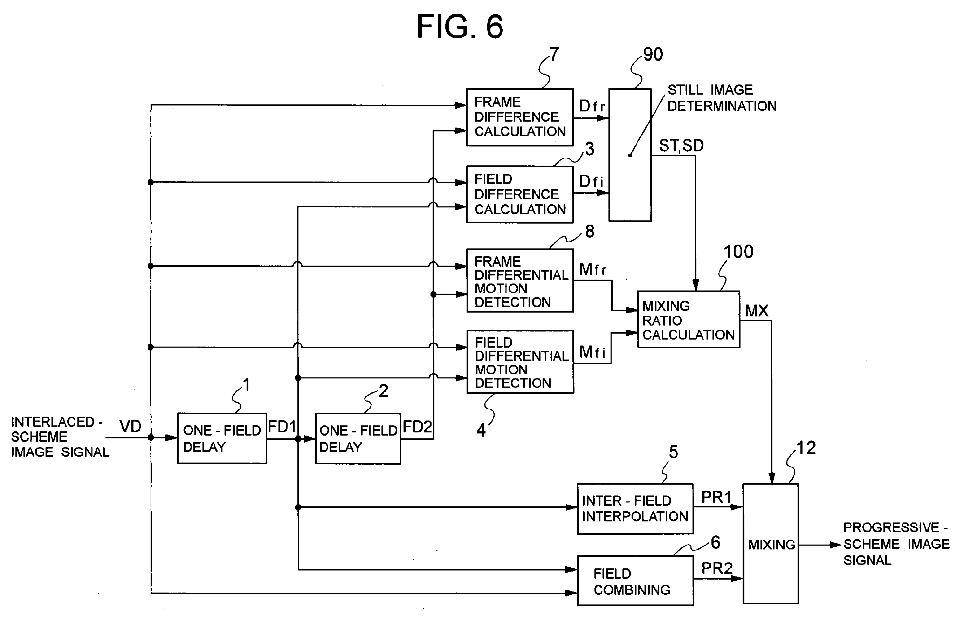

To solve the problem, Fig. 6 is a view showing another construction of an IP conversion processing circuit.

In the construction shown in Fig. 6, other constructions are similar to the construction shown in Fig. 1, excepting that a still image determination circuit 90 is employed instead of the still image determination circuit 9 shown in Fig. 1 and a mixing ratio calculation circuit 100 is employed instead of the selector 10 and the synthesizing circuit 11 shown in Fig. 1.

Accordingly, hereinafter, an operation of IP conversion circuit shown in Fig. 6 will be described centering on operations of the still image determination circuit 90 and the mixing ratio calculation circuit 100.

The still image determination circuit 90, similarly to the still image determination circuit 9, determines whether or not an image represented by interlaced-scheme image signals VD for one frame in accordance with the still image determination flow shown in Fig. 2. That is, the still image determination circuit 90 determines that the input image signal is a still image when a sum of difference values (field difference values Dfi)of the input image signals between the adjacent fields for the same pixels is smaller than a first threshold value D1 and when a sum of difference values (frame difference values Dfr)of the input image signals between the fields of the last and next fields with respect to each of the fields is smaller than a second threshold value D2.

In this case, the still image determination circuit 90 generates a still image determination signal ST having a logic level 1 when determines that the input image signal is a still image and a logic level 0 when determines that the input image signal is not still image, and then supplies the still image determination signal ST to the mixing ratio calculation circuit 100.

In addition, when the still image determination circuit 90 determines that the input image signal is a still image, the still image determination circuit 90 generates a still image depth signal SD representing a depth of the still image for one field based on the following mathematical formula:

$$SD = ( 1 - Dfi / D1 ) + b \cdot ( 1 - Dfr / D2 )$$

b : predetermined coefficient

$$Dfi < D1 \qquad Dfr < D2$$

In other words, the still image determination circuit 90 determines that the input image signal is a still image if the sum of difference values (Dfi, Dfr) are smaller than the predetermined threshold values (D1, D2), although the input image signal is not a complete still image as the sum of difference values (Dfi, Dfr) between the adjacent fields (or frames) for the same pixels becomes 0.

Further, the still image determination circuit 90 generates a rate of the sum (Dfi, Dfr) with respect to the threshold values (D1, D2) as the still image depth signal SD representing a depth of the still image when it determines the image is a still image by such still image determination process.

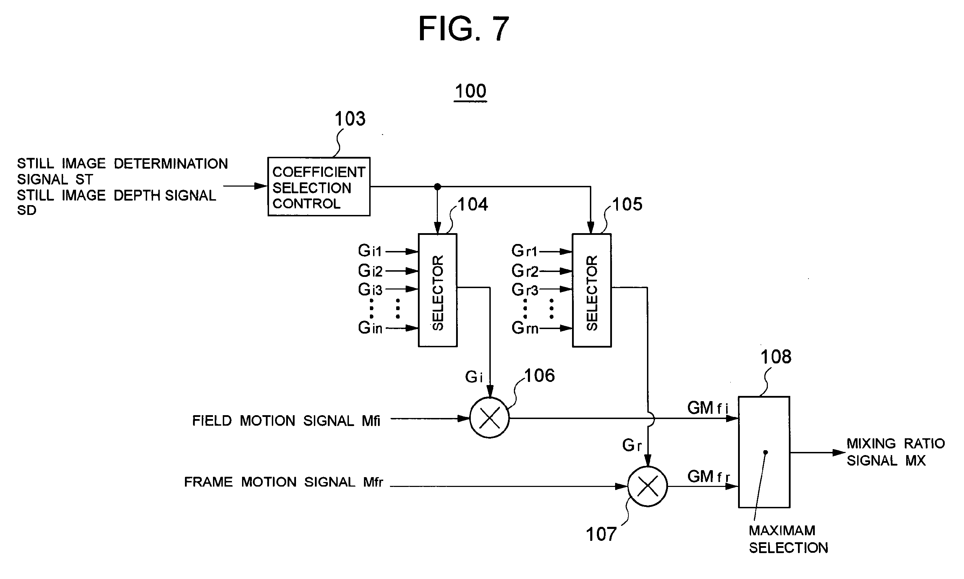

As shown in Fig. 7, the mixing ratio calculation circuit 100 includes a coefficient selection control circuit 103, selectors 104 and 105, coefficient multipliers 106 and 107, and a maximum selection circuit 108.

The coefficient selection control circuit 103 implements a first coefficient selection process (described below) based on the still image determination signal ST or a second coefficient selection process (described below) based on the still image determination signal ST and the still image depth signal SD.

The coefficient selection control circuit 103 generates a coefficient selection signal for selecting a coefficient to be supplied to each of the coefficient multipliers 106 and 107, and then supplies the coefficient selection signal to the selectors 104 and 105. The selector 104 alternatively selects a coefficient represented by the coefficient selection signal supplied from the coefficient selection control circuit 103 among a plurality of coefficients $G_{il}$ to $G_{in}$ representing a different coefficient, respectively, and supplies the coefficient to the coefficient multiplier 106. The selector 105 alternatively selects a coefficient represented by the coefficient selection signal supplied from the coefficient selection control circuit 103 among a plurality of coefficients $G_{rl}$ to $G_{rn}$ representing a different coefficient, respectively, and supplies the coefficient to the coefficient multiplier 105. The coefficient multiplier 106 supplies a coefficient multiplication field motion signal GMfi obtained by multiplying a field motion signal Mfi by the coefficient $G_i$ supplied from the selector 104 to the maximum selection circuit 108. The coefficient multiplier 107 supplies a coefficient multiplication frame motion signal GMfr obtained by multiplying a frame motion signal Mfr by the coefficient Gr supplied from the selector 105 to the maximum selection circuit 108. The maximum selection circuit 108 selects one of the coefficient multiplication field motion signal GMfi and the coefficient multiplication frame motion signal GMfr, the one having large signal level, and supplies the one to the mixing circuit 12 as a mixing ratio signal MX representing a mixing ratio.

Hereinafter, a coefficient selection control circuit 103 will be described in order of an operation by a first coefficient selection process and an operation by a second coefficient selection process.

Embodiment of first coefficient selection process

When a still image determination signal ST of logic level 0 is supplied, that is, an image based on the input image signal is a moving image state, the coefficient selection control circuit 103 supplies a coefficient selection signal for selecting a coefficient G representing a predetermined value to the selectors 104 and 105, respectively. The selector 104(105) selects a coefficient G representing the predetermined value among coefficients $G_{il}$ to $G_{in}$ ($G_{rl}$ to $G_{rn}$), and then supplies the coefficient G to the coefficient multiplier 106(107). Accordingly, in this case, the maximum selection circuit 108 supplies one of a coefficient multiplication frame motion signal GMfr obtained by multiplying a frame motion signal Mfr by the predetermined value and a coefficient multiplication field motion signal GMfi obtained by multiplying a field motion signal Mfi by the predetermined value, the one having large signal level, to the mixing circuit 12 as a mixing ratio signal MX representing a mixing ratio.

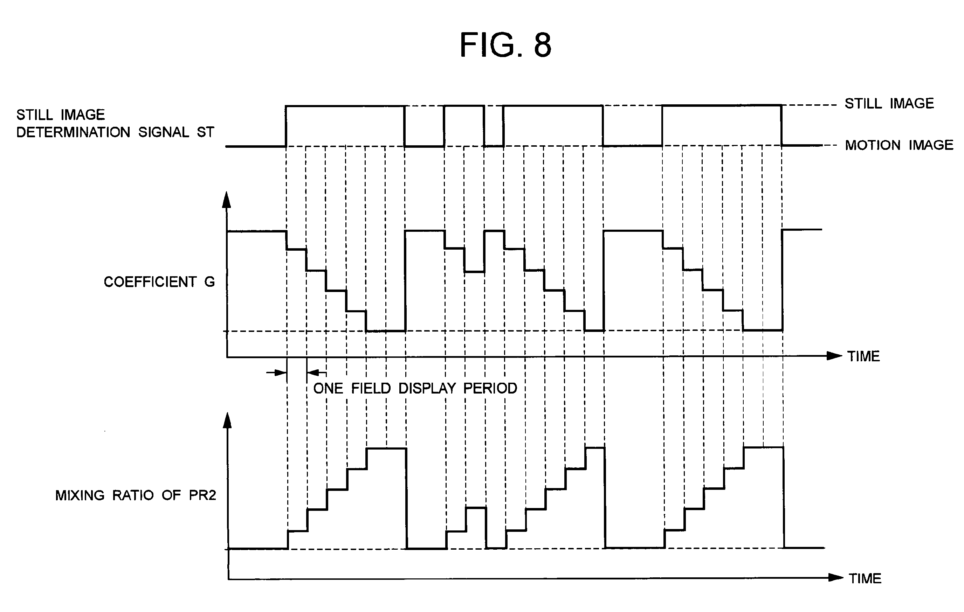

On the other hand, when it is determined that an image based on the input image signal is transited from a moving image to a still image by the still image determination signal ST, the coefficient selection control circuit 103, as shown in Fig. 8, supplies a coefficient selection signal for decreasing a coefficient G stepwise for each field to the selectors 104 and 105, while the still image state is maintained. Moreover, when the still image state is maintained through five-field display time interval or more, the coefficient selection control circuit 103 continuously supplies a coefficient selection signal for continuously selecting a coefficient selected in the fifth field display time interval to the selectors 104 and 105.

Accordingly, according to the first coefficient selection process, when an image based on the input image signal is transited from a moving image state to a still image state, a mixing ratio signal MX, the value thereof being gradually decreased corresponding to the coefficient G, is generated. Therefore, in this case, the mixing circuit 12 implements a mixing process of a first progressive-scheme image signal PR1 and a second progressive-scheme image signal PR2, while gradually increasing a mixing ratio of the second progressive-scheme image signal PR2 with the passage of time. In other words, immediately after an image based on the input image signal is transited from a moving image state to a still image state, the mixing ratio of the second progressive-scheme image signal PR2 becomes small, and then is gradually increased with the passage of time. Accordingly, since quality of entire image is gradually changed, a change of the image quality is difficult to be visualized, and thereby an image not having, so called, a sense of incongruity can be displayed.

On the other hand, at the time of switching an image based on the input image signal from a still image state to a moving image state, if the mixing ratio of the second progressive-scheme image signal PR2 is not lowered immediately, an image is distorted. Therefore, in this case, the coefficient selection control circuit 103, as shown in Fig. 8, implements a coefficient control for immediately supplying a comparatively large coefficient G to the coefficient multipliers 106 and 107.

That is, the coefficient selection control circuit 103 implements a coefficient control so as to lower a rate of change, ie, increase of a mixing ratio of the second progressive-scheme image signal PR2 with the passage of time when a result determined by the still image determination circuit 90 is changed from the determination that the image is not a still image to the determination that the image is a still image, compared to when changed from the determination that the image is a still image to the determination that the image is not a still image. Embodiment of second coefficient selection process

When a still image determination signal ST of logic level 0 is supplied, that is, an image based on the input image signal is a moving image state, the coefficient selection control circuit 103 supplies a coefficient selection signal for selecting a coefficient G representing a predetermined value to the selectors 104 and 105, respectively. The selector 104(105) selects a coefficient G representing the predetermined value among coefficients $G_{il}$ to $G_{in}$ ($G_{rl}$ to $G_{rn}$), and then supplies the coefficient G to the coefficient multiplier 106(107). Accordingly, in this case, the maximum selection circuit 108 supplies one of a coefficient multiplication frame motion signal GMfr obtained by multiplying a frame motion signal Mfr by the predetermined value and a coefficient multiplication field motion signal GMfi obtained by multiplying a field motion signal Mfi by the predetermined value, the one having large signal level, to the mixing circuit 12 as a mixing ratio signal MX representing a mixing ratio.

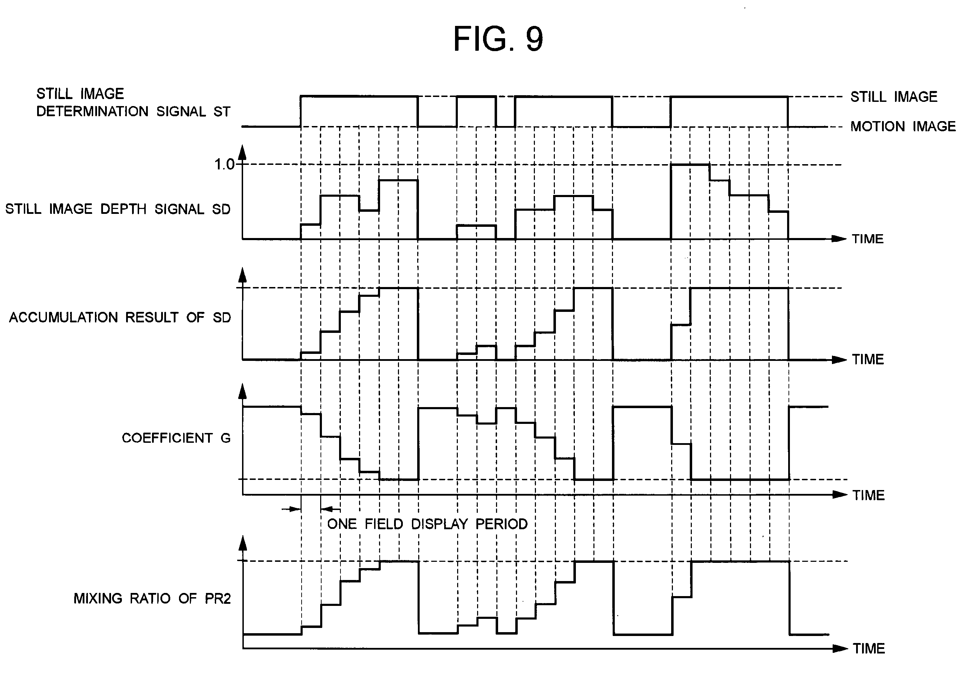

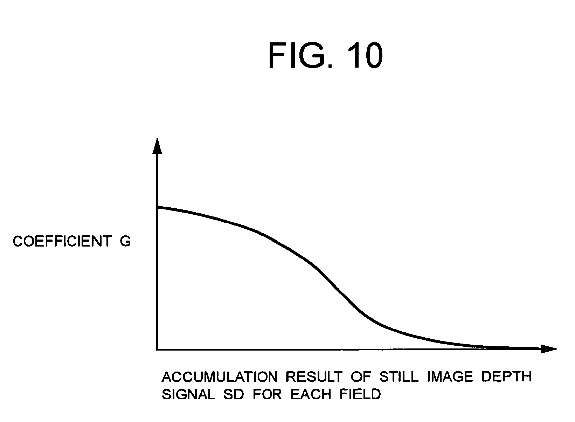

On the other hand, when it is determined that an image based on the input image signal is transited from a moving image to a still image by the still image determination signal ST, the coefficient selection control circuit 103 accumulates a value of the still image depth signal SD supplied for each field through maximum five-field display time interval, and obtains, as shown in Fig. 9, the accumulation result for each field. In addition, the coefficient selection control circuit 103 supplies a coefficient selection signal for selecting a coefficient G, which becomes small as the accumulation result becomes large for each field, to the selectors 104 and 105. For example, the coefficient selection control circuit 103 obtains a coefficient G from the accumulation result of the still image depth signal SD for each field, and supplies a coefficient selection signal for selecting the coefficient G to the selectors 104 and 105, based on characteristic shown in Fig. 10. In this case, the selectors 104 and 105 sequentially supply the coefficient G, which is gradually decreased as shown in Fig. 9, to the coefficient multipliers 106 and 107 for each field.

Accordingly, also according to the second coefficient selection process, similarly to the first coefficient selection process, when an image based on the input image signal is transited from a moving image state to a still image state, a mixing ratio signal MX, the value thereof being gradually decreased corresponding to the coefficient G as shown in Fig. 9, is generated. Therefore, in this case, the mixing circuit 12 implements a mixing process of a first progressive-scheme image signal PR1 and a second progressive-scheme image signal PR2 while gradually increasing a mixing ratio of the second progressive-scheme image signal PR2 with the passage of time. In other words, immediately after an image based on the input image signal is transited from a moving image state to a still image state, the mixing ratio of the second progressive-scheme image signal PR2 becomes small, and then is gradually increased with the passage of time. Accordingly, since quality of entire image is gradually changed, a change of the image quality is difficult to be visualized, and thereby an image not having, so called, a sense of incongruity can be displayed.

In this case, in the second coefficient selection process, a coefficient G is set based on the accumulation result of the still image depth signal SD for each field. Therefore, a change of image quality at the time of switching an image based on the input image signal from a moving image state to a still image state is more smoothly, compared to the case that the coefficient G is only set based on continuous number of a still image state like the first coefficient selection process.

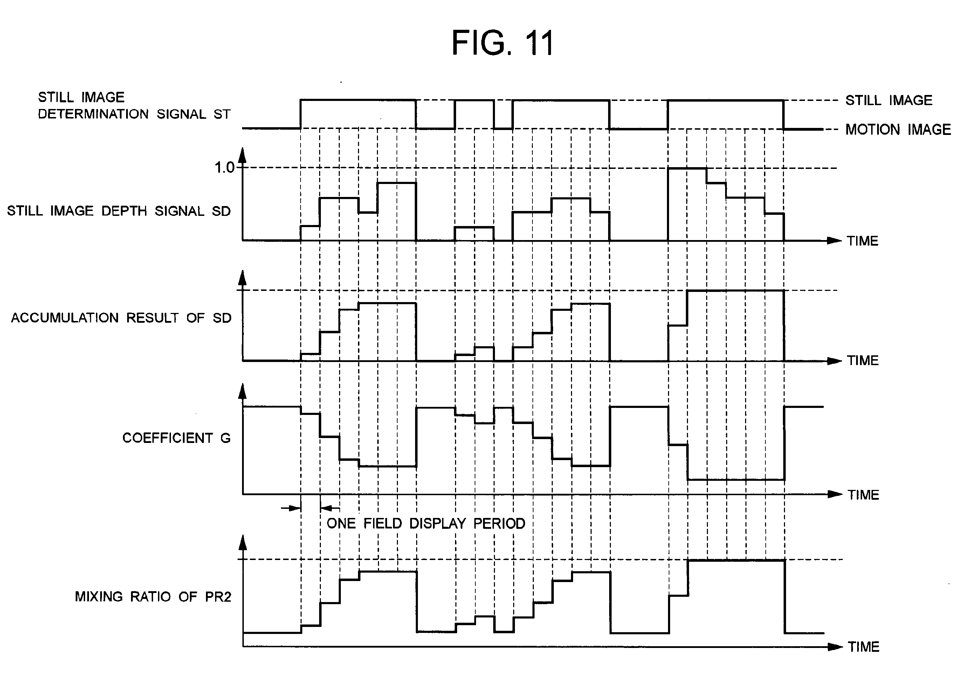

Moreover, as the second coefficient selection process is implemented, in the embodiment shown in Fig. 9, a value of the still image depth signal SD is accumulated through maxim five-field display time interval. However, as shown in Fig. 11, the value of the still image depth signal SD may be accumulated through maximum four-field display time interval.

Hereinafter, operation and effect of the IP conversion circuit shown in Fig. 6 will be described.

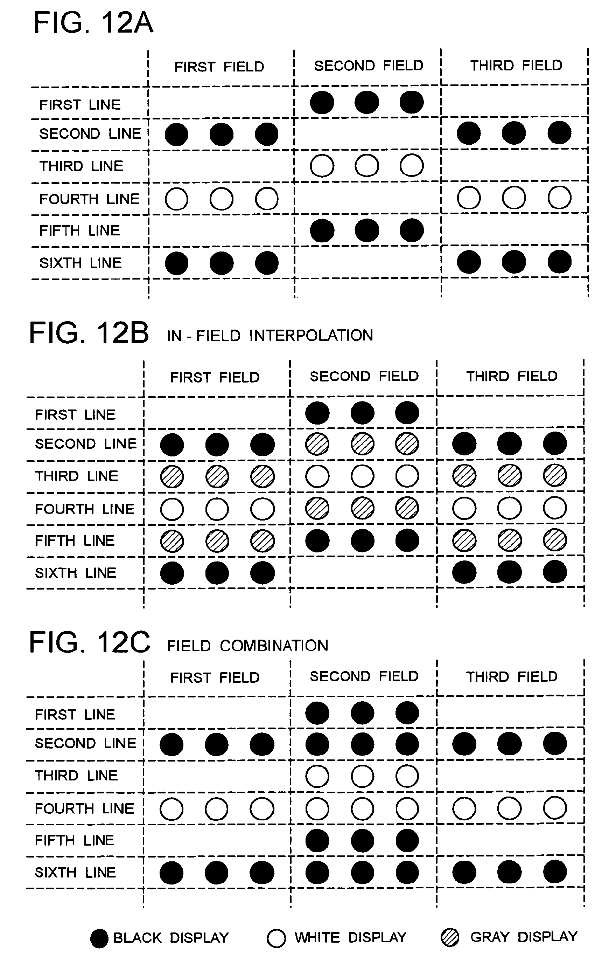

Fig. 12A is a schematic view showing a type for three fields of interlaced-scheme image signals VD representing a still image where black transverse lines for two display lines and white transverse lines for two display lines appear each other.

If a progressive conversion based on inter-field interpolation is performed with respect to the interlaced-scheme image signals VD of a picture as shown in Fig. 12A, first progressive-scheme image signals PR1 representing a picture as shown in Fig. 12B are generated. However, according to the progressive conversion based on inter-field interpolation, gray display portions (represented by oblique lines) are formed by interpolation of white display portions and black display portions, whereby original image cannot be reproduced.

On the other hand, if a progressive conversion based on field combining is performed with respect to the interlaced-scheme image signals VD of a picture as shown in Fig. 12A, as shown in Fig. 12C, second progressive-scheme image signals PR2 correctly reproducing a original picture are generated. In the case of a picture as shown in Fig. 12A, frame differences are not generated. However, since frame differences are generated, a still image depth becomes small value even if it is determined that the image is a still image by the still image determination circuit 90.

Accordingly, when an image represented by the input image signal is a still image, a progressive conversion based on the field combining can be more proper than a progressive conversion based on inter-field interpolation. However, if a still image determination is performed with respect to a still image of a picture as shown in Fig. 12A, since the still image depth is small, according to some changes of picture with the passage of time, it is determined that the image is a moving image at a certain point or it is determined that the image is a still image at a certain point. Accordingly, when the still image determination is transited from the determination that the image is a moving image to the determination that the image is a still image, if a mixing ratio of the second progressive-scheme image signal is immediately switched greatly, the picture is rapidly switched from the picture as shown in Fig. 12B to the picture as shown in Fig. 12C, whereby a flickered image is visualized.

Therefore, in the view of such circumstances mentioned above, in the IP conversion circuit shown in Fig. 6, when an image represented by the input image signal is switched from a moving image to a still image, a mixing ratio of the second progressive-scheme image signal is gradually increased with the passage of time. Accordingly, since the image is gradually switched from an image based on the first progressive-scheme image signal to an image based on the second progressive-scheme image signal, it is possible to provide an image not having a sense of incongruity even when an image represented by the input image signal is switched from a moving image to a still image.

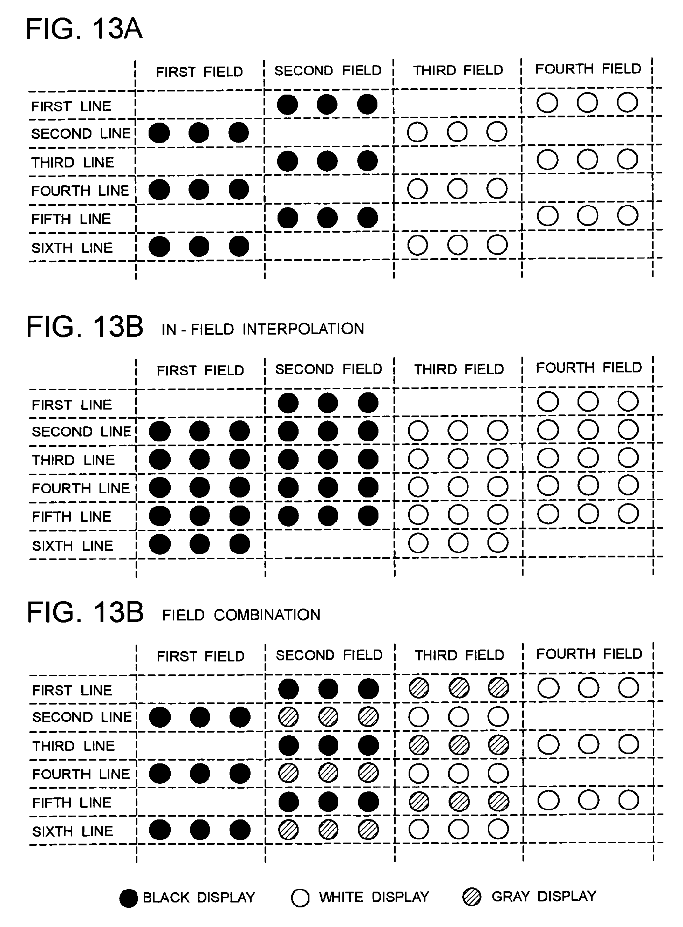

In addition, Fig. 13A is a schematic view showing a form for four fields of interlaced-scheme image signals VD when a still image is switched from all black state to all white state. In this case, the still image determination circuit 90 determines that the image is a still image since field difference values become small between the first field and the second field, and determines that the image is a moving image since field difference values become large between the second field and the third field.

If a progressive conversion based on inter-field interpolation is performed with respect to the interlaced-scheme image signals VD of a picture as shown in Fig. 13A, first progressive-scheme image signals PR1 correctly reproducing an original picture as shown in Fig. 13B are generated.

On the other hand, if a progressive conversion based on field combining is performed with respect to the interlaced-scheme image signals VD of a picture as shown in Fig. 13A, second progressive-scheme image signals PR2 representing a picture as shown in Fig. 13C are generated. However, according to the progressive conversion based on the field combining, gray display portions (represented by oblique lines) are formed in each of the second field and third field transited from black color to white color, whereby original image cannot be reproduced. At the time of transiting the image from the still image state (first and second fields) to the moving image state (second and third fields), if a mixing ratio of the first progressive-scheme image signals PR1 and the second progressive-scheme image signals PR2 is gradually changed, gray color generated in each of the second field and third field is accentuated and thereby visualized. Therefore, in the IP conversion circuit shown in Fig. 6, at the time of transiting the image from the still image state to the moving image state, a mixing ratio of the first progressive-scheme image signals PR1 and the second progressive-scheme image signals PR2 is rapidly changed.

In the aforementioned embodiment, the IP conversion process is implemented in a hardware manner. Alternatively, operations of functional modules shown in Fig. 1 or Fig. 6 may be implemented in a software manner. Namely, the IP conversion process equivalent to the functions of the IP conversion circuit shown in Fig. 1 or Fig. 6 may be implemented with a program which is read out and executed by a computer.

**Claims**

1. An image signal processing apparatus for converting input interlaced-scheme image signals to progressive-scheme image signals, the image signal processing apparatus comprising:

   a first conversion circuit which generates first progressive-scheme image signals for one frame by performing interpolation or extrapolation calculation on the input image signals for each field;
   a second conversion circuit which generates second progressive-scheme image signals for one frame by combining the input image signals of the one and the other fields of two adjacent fields;
   a still image determination circuit which determines whether or not an image for one frame based on the input image signals or an image corresponding to each of display regions divided from the one frame is a still image; and
   a mixing component which mixes the first and second progressive-scheme image signals to generate a progressive-scheme image signal with different mixing ratios to generate the progressive-scheme image signals when the still image determination circuit determines that the image is a still image and when the still image determination circuit determines that the image is not a still image.

2. The image signal processing apparatus according to Claim 1, wherein the still image determination circuit determines that the input image signals represent a still image when a sum of difference values of the input image signals between the two adjacent fields for the same pixels is smaller than a predetermined threshold value.

3. The image signal processing apparatus according to Claim 1, wherein the still image determination circuit determines that the input image signals represent a still image when a sum of difference values of the input image signals between the two adjacent fields for the same pixels is smaller than a predetermined first threshold value and when a sum of difference values of the input image signals between two fields of the last and next fields with respect to each field is smaller than a predetermined second threshold value.

4. The image signal processing apparatus according to Claim 1, wherein the still image determination circuit comprises:

   a circuit for determining whether or not a sum of field difference values that are difference values of the input image signals between the two adjacent fields for the same pixels is smaller than a predetermined first threshold value and determining whether or not a sum of frame difference values which are difference values of the input image signals between the two fields of the last and next fields with respect to each field for the same pixels is smaller than a predetermined second threshold value when the input image signal for one frame is supplied;
   a circuit for counting the number of times of consecutive determinations that the field difference value is smaller than first threshold value and the frame difference value is smaller than the second threshold value; and
   a circuit for determining that the input image signals represent a still image when the number of times is larger than a predetermined number.

5. The image signal processing apparatus according to Claim 1, further comprising:

   a field motion detection circuit which generates a field motion signal which represents an amount of motion of an image between the adjacent fields in the input image signals for each pixel;
   a frame motion detection circuit which generates a frame motion signal which represents an amount of the image between the adjacent frames in the input image signals for each pixel; and
   a synthesizing circuit which generates a synthesized motion signal by performing predetermined calculation for each pixel based on the field and frame motion signals,

   wherein the mixing component mixes the first and second progressive-scheme image signals for each pixel with a first mixing ratio based on the frame motion signal when the still image determination circuit determines that the image is a still image, and mixes the first and second progressive-scheme image signals for each pixel with a second mixing ratio based on the synthesized motion signal when the still image determination circuit determines that the image is not a still image.

**6.** The image signal processing apparatus according to Claim 5, wherein in the calculation, the field motion signal multiplied with a predetermined weighting coefficient is compared with the frame motion signal, and the larger one is set as the synthesized motion signal.

**7.** The image signal processing apparatus according to Claim 1, further comprising:

a field motion detection circuit which generates a field motion signal which represents an amount of motion of an image between the adjacent fields in the input image signals for each pixel; and
a frame motion detection circuit which generates a frame motion signal which represents an amount of motion of the image between the adjacent frames in the input image signals for each pixel,

wherein the mixing component mixes the first and second progressive-scheme image signals with a mixing ratio corresponding to a signal level of the larger one of the field motion signal and the frame motion signal.

**8.** The image signal processing apparatus according to Claim 1, further comprising:

a mixing ratio control component which controls a mixing ratio of the second progressive-scheme image signals to gradually increase the ratio thereof when a result determined by the still image determination circuit is changed from the determination that the image is not a still image to the determination that the image is a still image.

**9.** The image signal processing apparatus according to Claim 8, wherein in the mixing ratio control component, a rate of change of the mixing ratio with the passage of time is smaller when a result determined by the still image determination circuit is changed from the determination that the image is not a still image to the determination that the image is a still image, compared to when changed from the determination that the image is a still image to the determination that the image is not a still image.

**10.** The image signal processing apparatus according to Claim 8, wherein, when a result determined by the still image determination circuit is changed from the determination that the image is not a still image to the determination that the image is a still image, the mixing ratio control component controls a mixing ratio of the second progressive-scheme image signals to gradually increase the ratio thereof for one-field display time interval while the determination result that the image is a still image is continued.

**11.** The image signal processing apparatus according to Claim 1, wherein the still image determination circuit determines whether or not an image to be displayed in each of display regions is a still image, the display regions include a first display and a second display region having a plurality of pixels, respectively in one frame of image represented by the input image signal, and
the first region and the second region include the same pixels each other.

**12.** An interlace-to-progressive conversion method of converting input interlaced-scheme image signals to progressive-scheme image signals, the interlace-to-progressive conversion method comprising:

a first conversion step of generating first progressive-scheme image signals for one frame by performing interpolation or extrapolation calculation on the input image signals for each field;
a second conversion step of generating second progressive-scheme image signals for one frame by combining the input image signals of the one and the other fields of two adjacent fields;
a still image determination step of determining whether or not an image for one frame based on the input image signals or an image corresponding to each of display regions divided from the one frame is a still image; and
mixing step of mixing the first and second progressive-scheme image signals with different mixing ratios to generate the progressive-scheme image signals when, in the still image determination step, it is determined that the image is a still image and when, in the still image determination step, it is determined that the image is not a still image.

FIG. 1

INTERLACED - SCHEME IMAGE SIGNAL

VD

1 — ONE - FIELD DELAY — FD1

2 — ONE - FIELD DELAY — FD2

7 — FRAME DIFFERENCE CALCULATION — Dfr

3 — FIELD DIFFERENCE CALCULATION — Dfi

8 — FRAME DIFFERENTIAL MOTION DETECTION — Mfr

4 — FIELD DIFFERENTIAL MOTION DETECTION — Mfi

9 — STILL IMAGE DETERMINATION — ST

10 — SELECTOR — MX

11 — SYNTHESIZING — MV

5 — INTER - FIELD INTERPOLATION — PR1

7 — FIELD COMBINING — PR2

12 — MIXING

PROGRESSIVE - SCHEME IMAGE SIGNAL

16

# FIG. 2

```
        ┌──────────────────┐
        │  STILL  IMAGE    │
        │  DETERMINATION   │
        └────────┬─────────┘
                 │
                 ▼
        ┌──────────────────┐        S1
        │     0 → N        │
        └────────┬─────────┘
                 │
                 ▼
              ◇ S2
         ╱ NEW FIELD ? ╲ ──── NO
              ╲       ╱
           YES │
                 ▼   S3
         ╱ Dfr < Tfr ╲ ──── NO
              ╲   ?  ╱
           YES │
                 ▼   S4
         ╱ Dfi < Tfi ╲ ──── NO
              ╲   ?  ╱
           YES │
                 ▼   S5                    S7              S9
         ╱ N > NTH ╲ ──── NO
              ╲  ? ╱                ┌──────────────┐  ┌──────────────┐
           YES │                   │  N + 1 → N   │  │    0 → N     │
                 │                 └──────────────┘  └──────────────┘
                 │            S6
                 ▼                         ▼
┌──────────────────────────┐  ┌──────────────────────────┐
│ TRANSMIT  STILL  IMAGE   │  │ TRANSMIT  STILL  IMAGE   │  S8
│ DETERMINATION  SIGNAL    │  │ DETERMINATION  SIGNAL    │
│ ST  HAVING  LOGIC        │  │ ST  HAVING  LOGIC        │
│ LEVEL  1                 │  │ LEVEL  0                 │
└──────────────────────────┘  └──────────────────────────┘
```

## FIG. 3A

| | FIRST FIELD | SECOND FIELD | THIRD FIELD |
|---|---|---|---|
| FIRST LINE | | ○ ○ ○ | |
| SECOND LINE | ● ● ● | | ● ● ● |
| THIRD LINE | | ○ ○ ○ | |
| FOURTH LINE | ● ● ● | | ● ● ● |
| FIFTH LINE | | ○ ○ ○ | |
| SIXTH LINE | ● ● ● | | ● ● ● |

## FIG. 3B

| | FIRST FIELD | SECOND FIELD | THIRD FIELD |
|---|---|---|---|
| FIRST LINE | ● ● ● | ○ ○ ○ | ● ● ● |
| SECOND LINE | ● ● ● | ○ ○ ○ | ● ● ● |
| THIRD LINE | ● ● ● | ○ ○ ○ | ● ● ● |
| FOURTH LINE | ● ● ● | ○ ○ ○ | ● ● ● |
| FIFTH LINE | ● ● ● | ○ ○ ○ | ● ● ● |
| SIXTH LINE | ● ● ● | ○ ○ ○ | ● ● ● |

## FIG. 3C

| | FIRST FIELD | SECOND FIELD | THIRD FIELD |
|---|---|---|---|
| FIRST LINE | | ○ ○ ○ | ○ ○ ○ |
| SECOND LINE | | ● ● ● | ● ● ● |
| THIRD LINE | | ○ ○ ○ | ○ ○ ○ |
| FOURTH LINE | | ● ● ● | ● ● ● |
| FIFTH LINE | | ○ ○ ○ | ○ ○ ○ |
| SIXTH LINE | | ● ● ● | ● ● ● |

FIG. 4

| A | B |
|---|---|
| C | D |

# FIG. 5

| P(1,3) | P(2,3) | P(3,3) |
|--------|--------|--------|
| P(1,2) | P(2,2) | P(3,2) |
| P(1,1) | P(2,1) | P(3,1) |

## FIG. 6

EP 1 761 045 A2

# FIG. 7

EP 1 761 045 A2

# FIG. 8

STILL IMAGE
DETERMINATION SIGNAL ST

STILL IMAGE

MOTION IMAGE

COEFFICIENT G

TIME

ONE FIELD DISPLAY PERIOD

MIXING RATIO OF PR2

TIME

EP 1 761 045 A2

# FIG. 9

STILL IMAGE DETERMINATION SIGNAL ST — STILL IMAGE / MOTION IMAGE

STILL IMAGE DEPTH SIGNAL SD — TIME

ACCUMULATION RESULT OF SD — TIME

COEFFICIENT G — TIME

ONE FIELD DISPLAY PERIOD

MIXING RATIO OF PR2 — TIME

EP 1 761 045 A2

# FIG. 10

COEFFICIENT G

ACCUMULATION RESULT OF STILL IMAGE DEPTH
SIGNAL SD FOR EACH FIELD

# FIG. 11

STILL IMAGE
DETERMINATION SIGNAL ST

STILL IMAGE DEPTH SIGNAL SD

ACCUMULATION RESULT OF SD

COEFFICIENT G

ONE FIELD DISPLAY PERIOD

MIXING RATIO OF PR2

STILL IMAGE

MOTION IMAGE

1.0

TIME

TIME

TIME

TIME

EP 1 761 045 A2

## FIG. 12A

|  | FIRST FIELD | SECOND FIELD | THIRD FIELD |
|---|---|---|---|
| FIRST LINE |  | ● ● ● |  |
| SECOND LINE | ● ● ● |  | ● ● ● |
| THIRD LINE |  | ○ ○ ○ |  |
| FOURTH LINE | ○ ○ ○ |  | ○ ○ ○ |
| FIFTH LINE |  | ● ● ● |  |
| SIXTH LINE | ● ● ● |  | ● ● ● |

## FIG. 12B   IN - FIELD INTERPOLATION

|  | FIRST FIELD | SECOND FIELD | THIRD FIELD |
|---|---|---|---|
| FIRST LINE |  | ● ● ● |  |
| SECOND LINE | ● ● ● | ⊘ ⊘ ⊘ | ● ● ● |
| THIRD LINE | ⊘ ⊘ ⊘ | ○ ○ ○ | ⊘ ⊘ ⊘ |
| FOURTH LINE | ○ ○ ○ | ⊘ ⊘ ⊘ | ○ ○ ○ |
| FIFTH LINE | ⊘ ⊘ ⊘ | ● ● ● | ⊘ ⊘ ⊘ |
| SIXTH LINE | ● ● ● |  | ● ● ● |

## FIG. 12C   FIELD COMBINATION

|  | FIRST FIELD | SECOND FIELD | THIRD FIELD |
|---|---|---|---|
| FIRST LINE |  | ● ● ● |  |
| SECOND LINE | ● ● ● | ● ● ● | ● ● ● |
| THIRD LINE |  | ○ ○ ○ |  |
| FOURTH LINE | ○ ○ ○ | ○ ○ ○ | ○ ○ ○ |
| FIFTH LINE |  | ● ● ● |  |
| SIXTH LINE | ● ● ● | ● ● ● | ● ● ● |

● BLACK DISPLAY    ○ WHITE DISPLAY    ⊘ GRAY DISPLAY

## FIG. 13A

| | FIRST FIELD | SECOND FIELD | THIRD FIELD | FOURTH FIELD |
|---|---|---|---|---|
| FIRST LINE | | ● ● ● | | ○ ○ ○ |
| SECOND LINE | ● ● ● | | ○ ○ ○ | |
| THIRD LINE | | ● ● ● | | ○ ○ ○ |
| FOURTH LINE | ● ● ● | | ○ ○ ○ | |
| FIFTH LINE | | ● ● ● | | ○ ○ ○ |
| SIXTH LINE | ● ● ● | | ○ ○ ○ | |

## FIG. 13B IN - FIELD INTERPOLATION

| | FIRST FIELD | SECOND FIELD | THIRD FIELD | FOURTH FIELD |
|---|---|---|---|---|
| FIRST LINE | | ● ● ● | | ○ ○ ○ |
| SECOND LINE | ● ● ● | ● ● ● | ○ ○ ○ | ○ ○ ○ |
| THIRD LINE | ● ● ● | ● ● ● | ○ ○ ○ | ○ ○ ○ |
| FOURTH LINE | ● ● ● | ● ● ● | ○ ○ ○ | ○ ○ ○ |
| FIFTH LINE | ● ● ● | ● ● ● | ○ ○ ○ | ○ ○ ○ |
| SIXTH LINE | ● ● ● | | ○ ○ ○ | |

## FIG. 13B FIELD COMBINATION

| | FIRST FIELD | SECOND FIELD | THIRD FIELD | FOURTH FIELD |
|---|---|---|---|---|
| FIRST LINE | | ● ● ● | ⊘ ⊘ ⊘ | ○ ○ ○ |
| SECOND LINE | ● ● ● | ⊘ ⊘ ⊘ | ○ ○ ○ | |
| THIRD LINE | | ● ● ● | ⊘ ⊘ ⊘ | ○ ○ ○ |
| FOURTH LINE | ● ● ● | ⊘ ⊘ ⊘ | ○ ○ ○ | |
| FIFTH LINE | | ● ● ● | ⊘ ⊘ ⊘ | ○ ○ ○ |
| SIXTH LINE | ● ● ● | ⊘ ⊘ ⊘ | ○ ○ ○ | |

● BLACK DISPLAY    ○ WHITE DISPLAY    ⊘ GRAY DISPLAY

**EP 1 761 045 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003179886 A